# FASCICULE DE BREVET EUROPEEN

(11) **EP 1 396 983 B1**
(45) Date de publication et mention de la délivrance du brevet: **03.10.2012**
(21) Numéro de dépôt: 03291989.6
(22) Date de dépôt: 08.08.2003
(51) Int. Cl.: H04M 1/03, H04B 1/38, H01Q 9/04, H01Q 1/24

(54) **Agencement structurel pour terminal de radiocommunication comportant un haut-parleur et un écouteur**
Strukturanordnung für Funkendgeräte mit einem Lautsprecher und einer Hörmuschel
Structural arrangement for radiocommunications terminal comprising a loudspeaker and a receiver

(30) Priorité: 05.09.2002 FR 0210969
(43) Date de publication de la demande: 10.03.2004
(73) Titulaire: Z124, Grand Cayman (KY)
(72) Inventeur: Dufosse, Stéphane, 95240 Cormeilles en Parisis (FR); Villain, Jean-Christophe, 39340 Ounans (FR); Menu, Eric, 75017 Paris (FR); Lebaudour, Yves, 95130 Franconville (FR)
(74) Mandataire: Tolfts, Pippa Helen

(56) Documents cités:
- EP-A- 1 091 539
- EP-A- 1 294 051
- WO-A-00/38475
- WO-A-01/76342
- DE-A- 10 052 909

## Description

La présente invention concerne un agencement structurel pour terminal de radiocommunication.

WO 01/76342, EP 1091539 et WO 00/38475 sont des exemples de terminaux de radiocommunication.

La tendance actuelle est de chercher à réaliser des terminaux de radiocommunication de petite dimension avec une ergonomie fonctionnelle et conviviale. Un terminal de radiocommunication comprend principalement un boîtier dans lequel sont logés des équipements, en particulier un équipement d'émetteur récepteur radio comprenant au moins une antenne, et un équipement d'interface homme machine incluant généralement un clavier, un écran et un transducteur sonore.

La recherche d'une ergonomie et d'une commodité accrue a poussé, par exemple, à loger l'antenne à l'intérieur du boîtier avec le développement d'antennes planaires dites « patch ». Cette même tendance incite en outre à réaliser des interfaces homme machine de plus en plus complètes et de dimension de plus en plus grande.

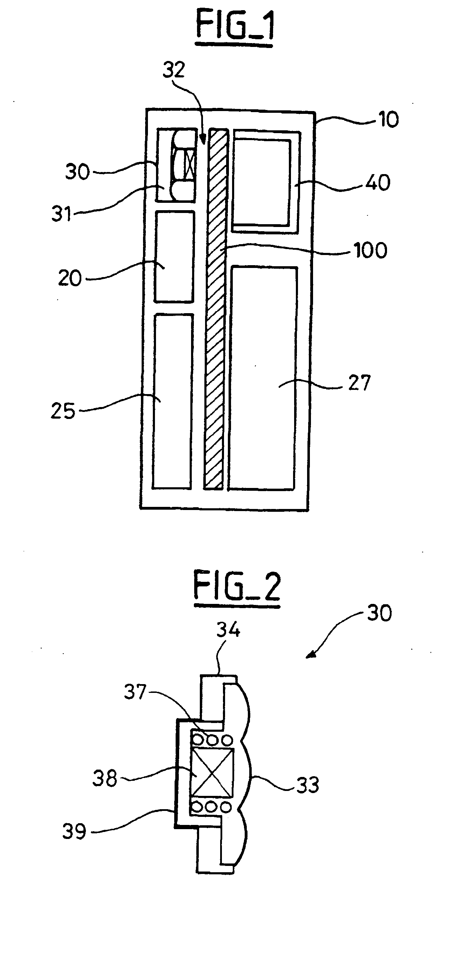

La figure 1 illustre schématiquement les différents composants compris dans un terminal de radiocommunication. Un tel terminal comprend généralement un boîtier 10 en matériau rigide isolant ou partiellement métallique dans lequel sont disposés différents composants connectés à une carte de circuit imprimé 100. Le terminal comprend au moins un écran 20, un clavier 25, une batterie 27, ainsi qu'une antenne 40 permettant d'établir une radiocommunication et un transducteur de restitution de sons 30 apte à transformer en ondes acoustiques les signaux électriques qui lui sont fournis.

Le transducteur sonore 30 peut remplir plusieurs fonctions telles que celles d'écouteur, de haut-parleur et de sonnerie. L'écouteur est essentiellement destiné à être placé contre l'oreille d'un utilisateur lors de l'utilisation de l'appareil en communication, la sonnerie permet d'alerter l'utilisateur d'un appel entrant ou d'une quelconque autre action et le haut-parleur permet une restitution sonore de fort volume pour des applications mains libres par exemple. Pour restituer les ondes acoustiques, le transducteur sonore 30 exploite deux volumes distincts de résonance acoustique définissant respectivement une cavité acoustique avant 31 et une cavité acoustique arrière 32 dont les formes et les dimensions sont choisies pour permettre une restitution sonore de qualité suffisante pour l'application à laquelle le transducteur est destiné. En particulier, la taille du transducteur 30 et les dimensions des cavités acoustiques avant 31 et arrière 32 définissent le spectre et l'intensité sonore du transducteur. Une cavité arrière de dimension insuffisante entraîne une limitation du spectre sonore dans les basses fréquences, ce qui diminue l'intensité du rendu sonore pour le bas du spectre.

La figure 2 illustre schématiquement un transducteur sonore. De manière classique, un transducteur 30 comporte une membrane vibrante 33 maintenue par des attaches sur les parois d'une coque 34 de manière à pouvoir vibrer librement sous l'action d'une bobine 37, dont elle est solidaire, elle-même mise en vibration par un aimant 38 disposé sur un support métallique 39, telle qu'une culasse.

Théoriquement, la fonction d'écouteur nécessite une taille de composant plus petite que celle requise pour une fonction de haut-parleur et de sonnerie qui doivent émettre un volume sonore plus important. Le volume d'utilisation d'un transducteur sonore 30 peut être défini comme le volume occupé par le composant lui-même et le volume occupé par les cavités acoustiques précédemment définies. Le volume de bon fonctionnement du transducteur ne peut pas être réduit au-delà d'une certaine limite imposée par la fonction de haut-parleur.

Or, comme indiqué précédemment, la tendance actuelle est d'agrandir l'interface homme-machine et en particulier l'écran avec l'utilisation d'écran à cristaux liquides par exemple. La taille du clavier ne pouvant être réduite, toujours pour une question de commodité d'utilisation, la présente invention propose d'exploiter la place occupée par le transducteur sonore afin d'agrandir la place disponible pour recevoir un écran sans pour autant diminuer la taille du clavier ni augmenter la taille du terminal mobile.

L'objectif de l'invention est de résoudre les inconvénients de l'art antérieur.

A cet effet, l'invention propose de ne conserver qu'un simple écouteur sur la face avant du terminal et de transférer le haut-parleur et la fonction de sonnerie à l'arrière du terminal. Afin de garantir une bonne qualité de restitution sonore, les cavités acoustiques arrières des deux transducteurs, constituant d'une part l'écouteur et d'autre par le haut-parleur, communiquent entre elles. On parlera par la suite de cavité acoustique arrière jumelle.

L'invention concerne plus spécifiquement un agencement structurel pour terminal de radiocommunication, l'agencement structurel comprenant un boîtier dans lequel sont disposés au moins un premier transducteur sonore remplissant une fonction d'écouteur et un deuxième transducteur sonore remplissant la fonction de haut-parleur, lesdits deux transducteurs étant connectés respectivement sur les deux faces opposées d'une carte de circuit imprimé, chacun desdits transducteur comprenant au moins une membrane vibrante résonant dans une cavité acoustique avant et une cavité acoustique arrière, caractérisé en ce que les cavités acoustiques arrières desdits transducteurs communiques entre elles à travers des orifices ménagés dans la carte de circuit imprimé pour former une cavité acoustique arrière jumelle.

Selon un mode de réalisation, le terminal comprend en outre une antenne planaire dite « patch » connectée à la carte de circuit imprimé, ladite antenne présentant une cavité délimitée par un plan de masse et une pastille conductrice disposée sur un support diélectrique, la cavité acoustique arrière jumelle étant alors comprise au moins partiellement dans la cavité de l'antenne.

Selon une variante de réalisation, au moins un desdits transducteurs sonores est disposé dans un évidement du circuit imprimé.

Les particularités et avantages de l'invention apparaîtront plus clairement à la lecture de la description qui suit, donnée à titre d'exemple illustratif et non limitatif et faite en référence aux figures annexées dans lesquelles :
- la figure 1, déjà décrite, illustre schématiquement les différents composants compris dans un terminal de radiocommunication ;
- la figure 2 illustre schématiquement un transducteur sonore ;
- la figure 3 illustre schématiquement une antenne planaire de type « patch» ;
- la figure 4 illustre schématiquement un agencement structurel selon l'invention.

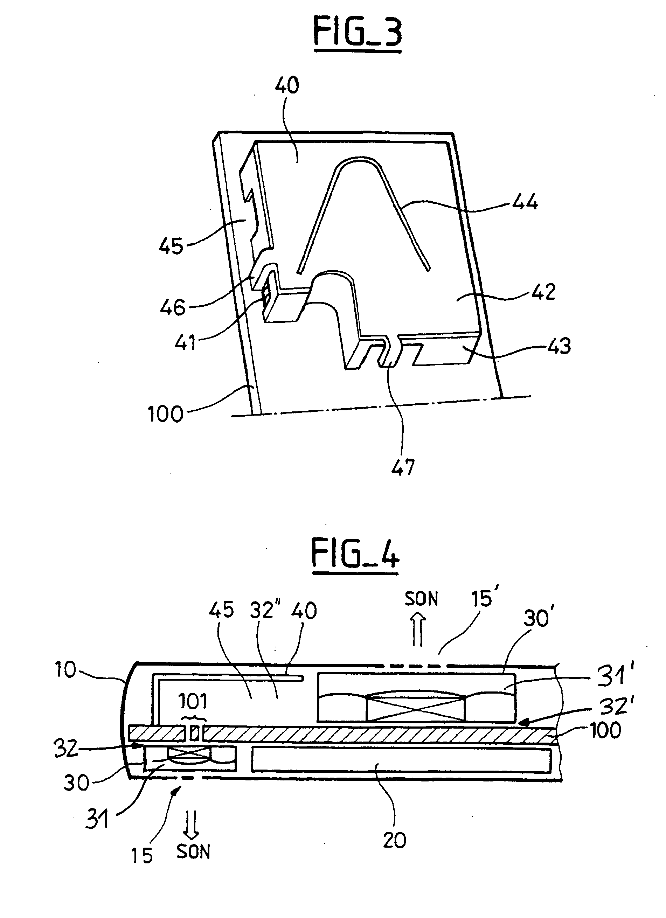

Selon l'invention, deux transducteurs distincts sont utilisés pour remplir respectivement les fonctions d'écouteur et de haut-parleur/sonnerie. La figure 4 illustre schématiquement un agencement possible selon la présente invention.

Comme mentionné précédemment, le volume de bon fonctionnement du transducteur écouteur est plus faible que le volume nécessité pour un bon fonctionnement du transducteur haut-parleur. Un premier transducteur, écouteur 30, est donc disposé à l'avant du boîtier 10 du terminal de radiocommunication, au-dessus d'un écran 20 de dimension accrue, tel qu'un écran à cristaux liquide par exemple. Un second transducteur, haut-parleur/sonnerie 30', est quant à lui disposé à l'arrière du boîtier 10 du terminal, du côté opposé de la carte de circuit imprimé 100 par rapport au premier transducteur 30.

De manière classique, chacun des transducteurs 30 et 30' présente une cavité acoustique avant 31, 31' et une cavité acoustique arrière 32, 32' telles que définies précédemment. Selon une caractéristique essentielle de l'invention, les cavités acoustiques arrières 32, 32' desdits transducteurs 30, 30' communiquent entre elles pour former une cavité acoustique arrière jumelle 32". En particulier, des orifices 101 sont ménagés dans la carte de circuit imprimé 100 afin de permettre cette communication desdites deux cavités arrières 32 et 32'.

Les orifices 101 permettant la formation de l'unique cavité acoustique arrière jumelle 32" peuvent être des trous ménagés dans la carte de circuit imprimé 100, de formes et dimensions adaptées, ou des échancrures dans les bords de ladite carte formant des espaces entre la carte de circuit imprimé 100 et le boîtier 10 du terminal.

La cavité acoustique arrière jumelle 32" présente ainsi des dimensions supérieures à celles de chacune des cavités arrières 32, 32' prise isolément. Ce volume acoustique accru pour chacun des transducteurs 30, 30' permet d'améliorer la qualité sonore desdits transducteurs, en particulier d'élargir la bande passante et d'augmenter le niveau sonore.

Selon une variante, au moins un des transducteurs sonores peut être disposé dans un évidement de la carte de circuit imprimé. Par exemple, la culasse et une partie de la coque du transducteur sont disposées dans un évidement de ladite carte. Dans cette variante de réalisation, l'évidement de la carte incorporant un des transducteurs tient lieu et place des orifices précédemment cités pour permettre la formation de la cavité acoustique arrière jumelle.

Le boîtier 10 du terminal comporte des ouvertures 15, 15' en regard des cavités acoustiques avant 31, 31' des transducteurs 30, 30' pour permettre une propagation des ondes acoustiques vers l'extérieur.

Selon un mode de réalisation avantageux, illustré sur la figure 4, le terminal comporte en outre une antenne planaire de type « patch »

En référence à la figure 3, une antenne « patch » est décrite. De telles antennes ont été développées en opposition aux antennes filaires classiquement utilisées et sont avantageusement intégrées dans le boîtier du terminal de radiocommunication. L'antenne patch 40 est disposée sur une face de la plaque de circuit imprimée 100 et présente une cavité 45 délimitée par deux structures conductrices, un plan de masse 41 et une pastille conductrice 42 disposée sur un support diélectrique 43. Le plan de masse 41 peut être constitué d'un unique élément plan, telle qu'une couche conductrice déposée sur la plaque 100, ou de plusieurs éléments conducteurs coplanaires éventuellement réalisés chacun sur des composants différents. La pastille conductrice 42 est généralement d'allure plane, mais peut être conformée selon les nécessités, et maintenue à une distance déterminée du plan de masse 41 par un support isolant rigide 43. Les formes et dimensions du support diélectrique 43 sont le résultat d'une adéquation dimensionnelle et structurelle à définir par l'homme du métier selon les applications recherchées.

Dans une forme préférée, la pastille conductrice 42 se présente sous la forme d'un élément conducteur plan ou quasi-plan constitué par une couche conductrice gravée portée par un fin substrat 43, ou par une plaquette mince. Cette pastille 42 se prolonge par deux pattes conductrices 46, 47, repliées ou rapportées, qui sont positionnées à sa périphérie afin d'assurer l'une, une fonction de court-circuit du fait de sa liaison directe avec le plan de masse 41 et, l'autre, une fonction d'alimentation de l'antenne en liaison avec un organe de traitement de signal, non représenté, de l'équipement émetteur-récepteur radio.

L'antenne 40 est préférentiellement de type bi-bande. Pour permettre un tel fonctionnement la pastille 42 est constituée par un élément conducteur plan en partie centrale duquel est ménagée une fente 44, qui traverse la pastille sur son épaisseur et qui a une allure de U évasé. Cette fente 44 délimite deux zones planes à la surface de la pastille, une première de ces zones, dite zone intérieure, correspond majoritairement à la partie de la pastille qui est située à l'intérieur du U ; et la seconde de ces zones, dite extérieure, s'étend sur le reste de la pastille au-delà de la zone intérieure.

Une telle disposition permet, comme il est connu, d'obtenir deux résonances, l'une plutôt dans la zone intérieure et l'autre plutôt dans la zone extérieure, à partir de la patte de court-circuit, l'une étant sensiblement quart d'onde dans la bande supérieure et l'autre sensiblement quart d'onde dans la bande inférieure de manière à permettre l'exploitation de l'antenne dans les deux bandes demandées, les formes et dimensions de cette antenne étant calculées de manière connue de l'homme de métier à cette fin.

Selon une variante avantageuse de l'invention, illustrée sur la figure 4, la cavité acoustique arrière jumelle 32" est comprise, au moins partiellement, dans la cavité électromagnétique 45 de l'antenne patch 40, sans pour autant nuire au bon fonctionnement de ladite antenne.

Le plan de masse 41 doit être ajouré en regard des orifices 101 ménagés dans la carte de circuit imprimé 100, mais cette discontinuité du plan de masse est minimisée par la taille réduite desdits orifices, de l'ordre de 1 à 2 mm de diamètre par exemple.

En outre, pour une meilleure communication des cavités arrières 32 et 32' des deux transducteurs 30, 30', le support diélectrique 43 de l'antenne 40 n'est pas complètement refermé sur le plan de masse. Un tel agencement ne nuit pas au bon fonctionnement de l'antenne 40 car la pastille conductrice 42 conserve la forme et la disposition requise, décrite en référence à la figure 3.

## Revendications

1. Agencement structurel pour terminal de radiocommunication, l'agencement structurel comprenant un boîtier (10) dans lequel sont disposés au moins un premier transducteur sonore (30) remplissant une fonction d'écouteur et un deuxième transducteur sonore (30') remplissant la fonction de haut-parleur, lesdits deux transducteurs (30, 30') étant connectés respectivement sur les deux faces opposées d'une carte de circuit imprimé (100), chacun desdits transducteur (30, 30') comprenant au moins une membrane vibrante résonnant dans une cavité acoustique avant (31, 31') et une cavité acoustique arrière (32, 32'), **caractérisé en ce que** les cavités acoustiques arrières (32, 32') desdits transducteurs communiquent entre elles à travers des orifices (101) ménagés dans la carte de circuit imprimé (100) pour former une cavité acoustique arrière jumelle (32").

2. Agencement structurel selon la revendication 1, le terminal comprenant en outre une antenne planaire dite « patch » (40) connectée à la carte de circuit imprimé (100) et présentant une cavité (45) délimitée par un plan de masse (41) et une pastille conductrice (42) disposée sur un support diélectrique (43), **caractérisé en ce que** la cavité acoustique arrière jumelle (32") est comprise au moins partiellement dans la cavité (45) de l'antenne (40).

3. Agencement structurel selon la revendication 2, **caractérisé en ce que** le plan de masse (41) de l'antenne (40) est ajouré.

4. Agencement structurel selon l'une des revendications 1 à 3, **caractérisé en ce que** les orifices (101) ménagés dans la carte de circuit imprimé constituent un évidement de ladite carte (100), au moins un desdits transducteurs sonores (30, 30') étant disposé dans ledit évidement.

5. Agencement structurel selon l'une des revendications 1 à 3, **caractérisé en ce que** les orifices (101) sont des trous réalisés dans la carte de circuit imprimé (100).

6. Agencement structurel selon l'une des revendications 1 à 3, **caractérisé en ce que** les orifices (101) sont des échancrures réalisées entre la carte de circuit imprimé (100) et le boîtier (10) du terminal.

## Claims

1. A structural arrangement for a radio communications terminal, the structural arrangement comprising a housing (10) in which at least one first sound transducer (30) performing a listening function and one second sound transducer (30') performing the speaker function are arranged, said two transducers (30, 30') respectively being connected on the two opposite surfaces of a printed circuit board (100), each of said transducers (30, 30') comprising at least one vibrating membrane resonating in a front acoustic cavity (31, 31') and a rear acoustic cavity (32, 32'), **characterized in that** the rear acoustic cavities (32, 32') of said transducers communicate with one another through openings (101) formed in the printed circuit board (100) to form a twin rear acoustic cavity (32").

2. The structural arrangement according to claim 1, the terminal also comprising a planar antenna called a "patch" (40) connected to the printed circuit board (100) and having a cavity (45) delimited by a floor plan (41) and a conductive chip (42) arranged on a dielectric substrate (43), **characterized in that** the twin rear acoustic cavity (32") is at least partially comprised in the cavity (45) of the antenna (40).

3. The structural arrangement according to claim 2, **characterized in that** the floor plan (41) of the antenna (40) is open-worked.

4. The structural arrangement according to one of claims 1 to 3, **characterized in that** the openings (101) formed in the printed circuit board constitute a recess of said board (100), at least one of said sound transducers (30, 30') being arranged in said recess.

5. The structural arrangement according to one of claims 1 to 3, **characterized in that** the openings (101) are holes made in the printed circuit board (100).

6. The structural arrangement according to one of claims 1 to 3, **characterized in that** the openings (101) are notches made between the printed circuit board (100) and the housing (10) of the terminal.

## Patentansprüche

1. Strukturelle Anordnung für ein Funkkommunikationsendgerät, wobei die strukturelle Anordnung ein Gehäuse (10) umfasst, in dem mindestens ein erster Schallwandler (30), der eine Hörerfunktion ausübt, und ein zweiter Schallwandler (30'), der die Lautsprecherfunktion ausübt, angeordnet sind, wobei die zwei Wandler (30, 30') jeweils auf den zwei entgegengesetzten Seiten einer Leiterplatte (100) verbunden sind, wobei jeder der Wandler (30, 30') mindestens eine Schwingmembran umfasst, die in einem vorderen akustischen Hohlraum (31, 31') und einem hinteren akustischen Hohlraum (32, 32') resoniert, **dadurch gekennzeichnet, dass** die hinteren akustischen Hohlräume (32, 32') der Wandler über Öffnungen (101) miteinander kommunizieren, die in der Leiterplatte (100) eingerichtet sind, um einen hinteren akustischen Doppelhohlraum (32") zu bilden.

2. Strukturelle Anordnung nach Anspruch 1, wobei das Endgerät außerdem eine Planarantenne, die als "Patchantenne" bezeichnet wird (40), umfasst, die mit der Leiterplatte (100) verbunden ist, und einen Hohlraum (45) aufweist, der von einer Masseebene (41) und einem leitfähigen Plättchen (42) abgegrenzt wird, das auf einem dielektrischen Träger (43) angeordnet ist, **dadurch gekennzeichnet, dass** der hintere akustische Doppelhohlraum (32") mindestens zum Teil von dem Hohlraum (45) der Antenne (40) umfasst wird.

3. Strukturelle Anordnung nach Anspruch 2, **dadurch gekennzeichnet, dass** die Masseebene (41) der Antenne (40) durchbrochen ist.

4. Strukturelle Anordnung nach einem der Ansprüche 1 bis 3, **dadurch gekennzeichnet, dass** die Öffnungen (101), die in der Leiterplatte eingerichtet sind, eine Aussparung der Platte (100) bilden, wobei mindestens einer der Schallwandler (30, 30') in der Aussparung angeordnet ist.

5. Strukturelle Anordnung nach einem der Ansprüche 1 bis 3, **dadurch gekennzeichnet, dass** die Öffnungen (101) Löcher sind, die in der Leiterplatte (100) hergestellt sind.

6. Strukturelle Anordnung nach einem der Ansprüche 1 bis 3, **dadurch gekennzeichnet, dass** die Öffnungen (101) Einschnitte sind, die zwischen der Leiterplatte (100) und dem Gehäuse (10) des Endgeräts hergestellt sind.
